# EUROPEAN PATENT SPECIFICATION

(11) **EP 0 484 342 B1**
(45) Date of publication and mention of the grant of the patent: **22.12.1993**
(21) Application number: 90909148.0
(22) Date of filing: 26.06.1990
(51) Int. Cl.: B01D 33/09

(54) **FILTER CYLINDER**
Filterzylinder
CYLINDRE DE FILTRAGE

(30) Priority: 06.07.1989 FI 893288
(43) Date of publication of application: 13.05.1992
(73) Proprietor: A. AHLSTROM CORPORATION, 29600 Noormarkku (FI)
(72) Inventor: HEINO, Jukka, SF-57600 Savonlinna (FI); KOHONEN, Raimo, SF-57230 Savonlinna (FI)
(74) Representative: Füchsle, Klaus, Dipl.-Ing.
(86) International application number: PCT/FI90/00168
(87) International publication number: WO 91/00767

(56) References cited:
- FR-B- 2 098 591
- US-A- 3 363 774

## Description

The present invention relates to a filter cylinder for treating pulp, which filter cylinder is especially suitable for treating fiber suspensions in the wood processing industry. The filter cylinder is particularly designed for washing or thickening said suspensions, in other words filtering liquids from fiber suspensions in the pulp and paper industry.

The invention relates more specifically to a so called drum filter, the basic construction of which comprises a vessel, into which suspension being thickened is supplied and a wire-surfaced cylinder rotatable in the vessel. The ends of the cylinder are sealed so as to prevent the cylinder from being filled with suspension. The cylinder has under its wire surface filtrate compartments, into which liquid from the suspension in the vessel is pressed due to the hydrostatic pressure, whereby the fibers in the suspension are transferred with the liquid to the wire surface and are thickened forming a fiber matting on it. The cylinder in this kind of filter based on hydrostatic pressure can be submerged in the suspension in the vessel only slightly below the axial level of the cylinder. When the cylinder rotates slowly, approximately 1 to 3 rpm, a fiber matting is gradually generated on the wire surface. The formation speed of the matting naturally depends not only on the thickness of the generated matting, but also on how deep in the vessel the filtration takes place. The filtration reaches its maximum speed slightly before the bottom dead centre, because the hydrostatic pressure is then close to its maximum and a thick matting does not yet disturb the filtration. After the bottom dead centre, the formation of the matting slows down, until the formation, of course, ceases completely, when the matting rises from the suspension.

As the fiber matting rises from the vessel when the cylinder rotates the filtration based on gravitation begins, liquid flows slowly due to the effect of the gravitation through the fiber matting into the filtrate compartments inside the wire surface. The fiber matting is removed from the cylinder at a stage, when it has passed the top dead centre of the cylinder and approaches the surface of the suspension. The matting may be removed either mechanically with wipers or by injecting either liquid or compressed air through the wire surface. The liquid which has flowed into the filtrate compartments may be discharged from the apparatus, for example, via the shaft of the apparatus or by utilizing some other arrangement. The length of a filtration period based on hydrostatic pressure in an apparatus according to the above description is approximately 140° of a revolution of a cylinder and the proportion of the initial filtration is approximately 30° and the proportion of the vacuum drying (above the liquid surface of the vessel) is approximately 100°.

The above described basic type of a drum filter has been considerably improved over the decades. One significant improvement worth mentioning is the subjecting of the suspension in the vessel to a suction through the compartments, as shown in US patent document 3,363,774, whereby the filtration of liquid improves considerably and thus the capacity of the apparatus increases significantly. Most usually the suction is carried out by a suction leg in such a way that each of the filtrate compartments is connected by means of a separate filtrate tube to a valve connected to the suction leg in the shaft of the apparatus, the operation of which valve is controlled in such a way that the fiber matting is subjected to suction in a sector of approximately 240°. Approximately 30 filtrate compartments have been arranged on the cylinder, each of which compartments has been connected with a separate filtrate tube to the shaft tube of the cylinder surrounding the valve. Since the fiber matting generated this way is significantly more tightly attached to the filter surface than the matting generated in a conventional way, the thickened fiber matting must be removed by separate apparatuses from the filter surface. At this point it must be noted that the suction leg may be replaced by some other apparatus creating underpressure, such as a vacuum pump.

The filtrate compartments in accordance with the prior art, have one disadvantage, which occurs particularly in the operation stage of the filter cylinder, when the pulp web is removed from the wire surface of the cylinder. At this point the filter cylinder, described in, for example, FI Patent 55538 or US 3,363,774, and the filter compartments with it in the removal stage have turned to a position where the liquid still in the compartment leans in the rotational direction of the cylinder against the front wall not being able to exit from the compartment anymore, since the discharge openings of the compartment do not usually extend to the entire width of the bottom of the compartment. Consequently, especially when the suction is interrupted and the compartment turns further the filtrate starts to lean against the wire surface, whereby it, of course, permeates through the wire surface and flows back to the vessel or to the pulp web to dilute the consistency thereof.

It has been possible to solve the problems of the prior art apparatuses with the present invention in such a way that by applying the filter cylinder in accordance with the present invention it is possible to remove all liquid from the filter compartment without a risk of the filtrate flowing back to the pulp web.

The filter cylinder in accordance with the present invention is characterized in that the filtrate compartments comprise a bottom part and at least one side wall, the leading side wall of each compartment with respect to the direction of rotation of cylindrical part is provided at its upper edge remote from the bottom part with a bending extending towards the inside of the compartment or with a projecting lip or other overhanging portion, which bending or lip prevents the filtrate from escaping from the compartment back through the wire surface, when the compartment is rolled.

The filter cylinder in accordance with the present invention is described in more detail below, by way of example, with reference to the accompanying drawings, in which:
Fig. 1 is an axially sectional view of part of a filter cylinder in accordance with the present invention; and
Fig. 2 is an enlarged fragmentary detailed sectional view at a radial level of the filter cylinder in accordance with the present invention.

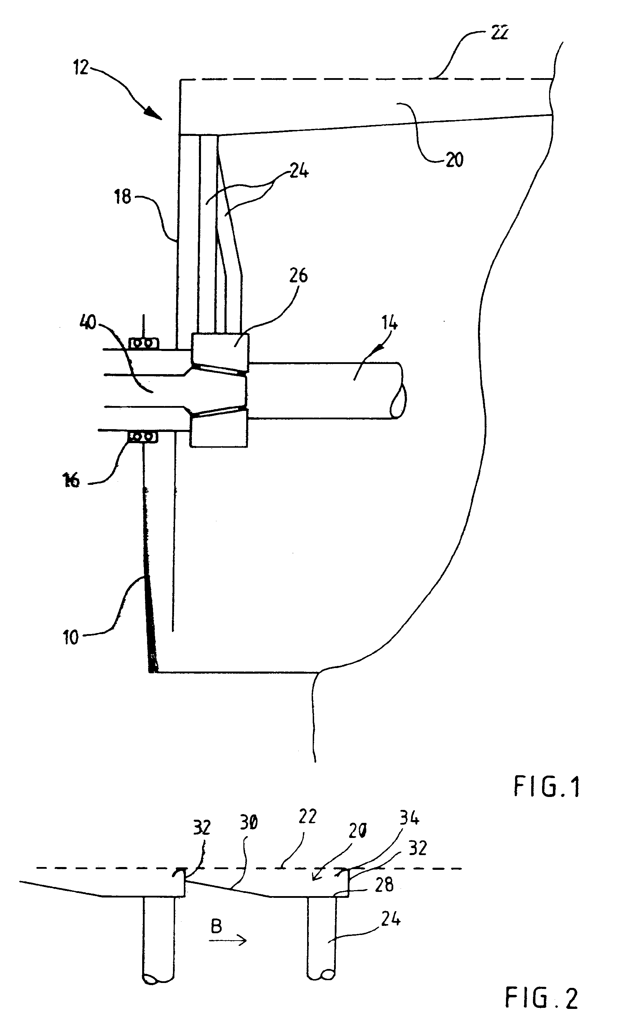

According to Fig. 1 a filter apparatus mainly comprises a vessel 10, which may be either completely open from the top or covered with a hood, and a filter cylinder 12, which is arranged on shaft 14, which is mounted in the ends with bearings and seals 16 relative to the vessel 10. The body of the filter cylinder 12 comprises end plates 18 attached to an extension of the shaft 14, which plates at the same time prevent the admittance of the suspension to the inside of the cylinder, and filtrate compartments 20, by means of which the ends of the cylinder are connected to each other and which form the primary structure of the cylinder. The cover of a filtrate compartment may be either a perforated plate, on which the wire surface operating as a filter surface is located, or the wire 22 itself. If the cover of the filtrate compartment is a perforated plate, it can contribute to operate as a member bearing the stresses of the cylinder. A great number of filtrate compartments 20, approximately 30 - 40, has been arranged at the rim of the cylinder. The bottoms 30, 28 of the filtrate compartments 20 are inclined either only towards one end of the cylinder or from the center in both directions towards opposite ends mainly according to the total length of the cylinder, which in most of-the cases is more than 5 meters. Filtrate tubes 24 leading towards the shaft 14 of the cylinder are connected to the bottom 28 of the filtrate compartments 20 at the end of the cylinder (or at both ends, when the compartments have been inclined towards both ends). The extension of the shaft 14 adjacent to the filtrate tubes 24 is a distribution chamber 26, to which the filtrate tubes 24 are connected in either one or two rows mainly according to the diameter of the distribution chamber 26. The distribution chamber 26 is mainly required for the reason that the filtrate flow of the filtrate tubes may be led to the suction leg without a need to contsrict the sectional surface area of the flow. In the distribution chamber the sectional surface area of the flow is changed from the shape of a round filtrate tube to rectangular defined by the radial intermediate and end walls of the chamber. A valve apparatus 40 guiding the filtrates of tubes 24 in a desired manner is located inside the distribution chamber 26. By means of the same valve it is possible, when an operation method of a conventional filter is concerned, to also lead the removal liquid or gas of a fiber matting by means of filtrate tubes 24 to filtrate compartments 20.

The filtrate compartment 20 comprises according to Fig. 2 a bottom part 28 substantially parallel to the rim of the filter surface, to which part 28 a filtrate tube 24 is connected, an inclined bottom part 30 joining the trailing edge of the bottom part 28, in the rotational direction, arrow B, of the filter cylinder and advantageously forming an approximately 165° angle with the bottom part 28, as well as a substantially radial wall 32 joining the leading edge of the bottom part in the rotational direction. The outer edge of wall 32 is provided with an inturned lip or bending 34 towards the filtrate compartment, the purpose of which bending 34 is to prevent the filtrate in the compartment from escaping through a filter surface 22 back to the fiber matting or, after it is removed, back to the vessel when the cylinder turns to a position, in which the pulp web is removed from the filter surface (turned approximately 60° downwards and to the right from the situation in the figure). The bottom part 30 rises advantageously to about halfway along the wall 32 of the next filtrate compartment, and the bottom part 30 is attached to wall 32, for example, by welding. The construction thus produced is very resistant against different stresses it may be subjected to. Additionally, the bending 34 strengthens the compartments against bending stresses. The bending 34 also forms a good attachment place for the filter surface 22.

The bending 34 formed in the filtrate compartment 20 retains inside it all the filtrate which might otherwise mix with the pulp web in the removal stage of the web. Said filtrate remains in the compartment 20 until the compartment submerges under the surface of the suspension and the filtration based on the hydrostatic pressure begins, whereby it is either discharged with the air being discharged from the filtrate tubes or in the stage when the suction is connected.

As it will be appreciated from the above description, it has been possible to eliminate or minimize the defects occuring with the prior art apparatuses by an apparatus, which is easy to produce and by means of which the filter cylinder becomes stronger than the those of the prior art.

## Claims

1. A filter cylinder including a substantially cylindrical wire-surfaced part rotatable in a vessel, substantially axial filtrate compartments arranged one beside the other and forming a shell of said part, filtrate tubes extending substantially radially towards the shaft of the cylinder from the bottoms of the compartments and means for discharging filtrate from the filtrate tubes, said filtrate compartments comprising a bottom part and at least one side wall, **characterized** in that the leading side wall (32) of each compartment (20) with respect to the direction of rotation (B) of cylindrical part (12) is provided at its upper edge remote from the bottom part (28, 30) facing the wire with a bending (34) extending towards the inside of the compartment (20) or with a projecting lip or other overhanging portion, which bending (34) or lip prevents the filtrate from escaping from the compartment (20) back through the wire surface, when the compartment (20) is rolled.

2. A filter cylinder in accordance with claim 1, **characterized** in that the bottom part of the filtrate compartment (20) comprises two planes, of which one (28) joining the side surface (32) is substantially parallel to the rim of the cylinder and the other (30) gently inclined extending from part (28) in the opposite direction towards the surface of the cylinder.

3. A filter cylinder in accordance with claim 1, **characterized** in that the distance of the bottom part of the filtrate compartment (20) from the shaft (14) of the cylinder diminishes towards the filtrate tubes (24).

## Patentansprüche

1. Filterzylinder bestehend aus einem hauptsächlich zylindrischen siebüberzogenen in einem Behälter drehbaren Teil, hauptsächlich axialen, nebeneinander angeordneten und einen Mantel des genannten Teils bildenden Filtratabteilen, sich hauptsächlich radial zur Welle des Zylinders hin von den Böden der Abteile erstreckenden Filtratrohren, und Mitteln zur Ableitung von Filtrat aus den Filtratrohren, welche Filtratabteile einen Bodenteil und mindestens eine Seitenwand umfassen, dadurch **gekennzeichnet,** daß die vordere Seitenwand (32) eines jeden Abteils (20) in Hinsicht auf die Drehrichtung (B) des zylindrischen Teils (12) an seiner oberen, vom Bodenteil (28, 30) entfernten, dem Sieb zugewandten Kante mit einer sich zum Inneren des Abteils (20) hin erstreckenden Biegung (34) oder mit einer herausragenden Lippe oder einem anderen vorspringenden Teil versehen ist, welche Biegung (34) oder Lippe verhindert, daß das Filtrat durch die Siebfläche aus dem Abteil (20) rückwärts ausläuft, wenn sich das Abteil (20) dreht.

2. Filterzylinder gemäß Anspruch 1, dadurch **gekennzeichnet,** daß der Bodenteil des Filtratabteiles (20) zwei Flächen umfaßt, wovon die eine sich an die Seitenfläche (32) anschließende (28) zum Umfang des Zylinders hauptsächlich parallel ist und die andere (30) sich leicht geneigt vom Teil (28) in die entgegengesetzte Richtung zur Oberfläche des Zylinders hin erstreckt.

3. Filterzylinder gemäß Anspruch 1, dadurch **gekennzeichnet**, daß der Abstand des Bodenteils des Filtratabteiles (20) von der Welle (14) des Zylinders zu den Filtratrohren (24) hin kleiner wird.

## Revendications

1. Cylindre filtrant comprenant une partie sensiblement cylindrique, à la surface en tamis, pouvant tourner dans un récipient, des compartiments à filtrat sensiblement axiaux, disposés l'un auprès de l'autre et formant une enveloppe de ladite partie, des tubes à filtrat s'étendant sensiblement radialement vers l'arbre du cylindre à partir des fonds des compartiments et des moyens pour décharger le filtrat à partir des tubes à filtrat, lesdits compartiments à filtrat comportant une partie inférieure et au moins une paroi latérale, caractérisé en ce que la paroi latérale avant (32) de chaque compartiment (20) par rapport au sens de rotation (B) de la partie cylindrique (12) comporte à son bord supérieur distant de la partie inférieure (28, 30) en regard du tamis une partie cambrée (34) s'étendant vers l'intérieur du compartiment (20) ou une lèvre en saillie ou autre portion en porte-à-faux, la partie cambrée (34) ou la lèvre empêchant que le filtrat ne s'échappe du compartiment (20) pour revenir à travers la surface du tamis, lorsque le compartiment (20) roule.

2. Cylindre filtrant selon la revendication 1, caractérisé en ce que la partie inférieure du compartiment à filtrat (20) comprend deux plans, dont l'un (28) rejoignant la surface latérale (32) est sensiblement parallèle au pourtour du cylindre et l'autre (30) est doucement incliné en s'étendant à partir de la partie (28) dans le sens opposé dans la direction de la surface du cylindre.

3. Cylindre filtrant selon la revendication 1, caractérisé en ce que la distance de la partie inférieure du compartiment à filtrat (20) par rapport à l'arbre (14) du cylindre diminue dans la direction des tubes à filtrat (24).
